# EUROPEAN PATENT SPECIFICATION

(11) **EP 4 565 905 B1**
(45) Date of publication and mention of the grant of the patent: **05.11.2025**
(21) Application number: 23761653.7
(22) Date of filing: 02.08.2023
(51) Int. Cl.: G01V 3/08, G01V 3/15

(54) **SYSTEM AND METHOD FOR DETECTING DEFECTS IN PIPELINES**
SYSTEM UND VERFAHREN ZUR ERKENNUNG VON DEFEKTEN IN ROHRLEITUNGEN
SYSTÈME ET PROCÉDÉ PERMETTANT DE DÉTECTER DES DÉFAUTS DANS DES PIPELINES

(30) Priority: 03.08.2022 US 202217880054
(43) Date of publication of application: 11.06.2025
(73) Proprietor: Saudi Arabian Oil Company, Dhahran 31311 (SA)
(72) Inventor: ALJARRO, Ahmed, Thuwal, 23955 (SA); ABDULMOHSIN, Mohmmed T., Khurais, 36557 (SA); GHAMDI, Khalid, Dhahran, 31311 (SA); ZAHRANI, Salah A., Dhahran, 31311 (SA); MUDAIBEGH, Isa H., Dhahran, 31311 (SA)
(74) Representative: Fish & Richardson P.C.
(86) International application number: PCT/US2023/029310
(87) International publication number: WO 2024/030490

(56) References cited:
- WO-A1-2017/196420
- WO-A2-99/32902
- MOHAMMED S. EL-ABBASY ET AL: "Artificial neural network models for predicting condition of offshore oil and gas pipelines", AUTOMATION IN CONSTRUCTION, vol. 45, 1 September 2014 (2014-09-01), AMSTERDAM, NL, pages 50 - 65, XP055482568, ISSN: 0926-5805, DOI: 10.1016/j.autcon.2014.05.003

## Description

### CLAIM OF PRIORITY

This patent claims priority to U.S. Patent Application No. 17/880,054 filed on August 3, 2022.

### TECHNICAL FIELD

This disclosure generally relates to the maintenance of oil and gas pipelines.

### BACKGROUND

Oil and gas pipelines generally include metal structures that are subject to a wall-loss condition, often characterized as a degradation in structural integrity as a result of corrosion on the inner surfaces, outer surfaces, internally between the surfaces, or full surface to surface. For defects related to corrosion in metallic pipelines, the typical causes are contaminants that interact with the metallic material.

WO 2017/196420 describes a computer-based corrosion/erosion module, communicatively coupled with a probe, that estimates corrosion/erosion rates in a pipeline based on metal loss measurements. A High Integrity Pipeline Protection System (HIPPS), upstream of the corrosion/erosion module, includes at least two pressure-sensing elements, connected to the pipeline, for capturing pressure readings associated with inside pressures of the pipeline. The HIPPS also includes at least two final elements, such as HIPPS valves, configured to stop a flow of fluid through the pipeline. A logic solver, coupled with the corrosion/erosion module and the HIPPS, is configured to automatically monitor mechanical integrity of the pipeline in real time using the captured pressure readings and estimated metal loss measurements. The logic solver determines a trip set point adjustment using the estimated metal loss measurements and provides the trip set point adjustment to the final elements.

El-Abbasy et al. (Automat. Construct 45, p. 50 - 65, doi: 10.1016/j.autcon.2014.05.003) describes artificial neural network models for predicting the condition of offshore oil and gas pipelines.

WO 99/32902 describes a pipeline inspection and defect mapping system including a pig having an inertial measurement unit and a pipeline inspection unit for recording pig location and defect detection events, each record time stamped by a highly precise onboard clock. The system also includes several magloggers at precisely known locations along the pipeline, each containing a fluxgate magnetometer for detecting the passage of the pig along the pipeline and further containing a highly precise clock synchronized with the clock in the pig. The locations of the various magloggers are known in a north/east/down coordinate system through a differential global positioning satellite process. Finally, a postprocessing off-line computer system receives downloaded maglogger, inertial measurement, and odometer data and through the use of several Kalman filters, derives the location of the detected defects in the north/east/down coordinate frame.

### SUMMARY

The invention is defined in the claims. In one aspect, some implementations provide a computer-implemented method for maintaining buried pipelines subject to a wall-loss condition, the method including: generating a first data structure encoding a configuration of a buried pipeline and a tool, wherein the buried pipeline comprises a metal wall enclosing an interior space, wherein the tool is part of a smart pipeline intervention gauge (PIG) device configured to navigate the buried pipeline from inside the interior space, wherein the tool comprises a transmitter and multiple receivers, and wherein the multiple receivers are circumferentially positioned in the interior space and separated from the metal wall; obtaining a second data structure encoding a solver configured to simulate a response on one of the multiple receivers from inside the metal wall of the buried pipeline; applying the solver using the configuration of the buried pipeline and the tool when the transmitter sends a known electromagnetic (EM) waveform inside the metal wall of the buried pipeline; generating simulated responses on the multiple receivers from inside the metal wall of the buried pipeline; based on, at least in part, the simulated responses, training an inference model configured to predict the wall-loss condition of a particular buried pipeline; and storing a third data structure encoding the inference model on the smart PIG device so that when the smart PIG device navigates the particular buried pipeline and obtains measurement data inside the particular buried pipeline, the inference model predicts the wall-loss condition of the particular buried pipeline using the measurement data.

Implementations may include one or more of the following features.

The training may further include: calibrating the inference model by comparing the predicted wall-loss condition with a physically observed wall-loss condition of the particular buried pipeline. The training may further include: adjusting the inference model to reduce a difference between the predicted wall-loss condition and the physically observed wall-loss condition. The wall-loss condition comprises a partially corroded circumference of the metal wall. The partially corroded circumference corresponds to at least one of: a corrosion from inside the metal wall, a corrosion from outside the metal wall, or a total loss of the metal wall.

The inference model may include: multiple layers of artificial neural network (ANN). The solver may include: a physics-based solver. The first data structure may prescribe a boundary condition of the buried pipeline for the solver to compute responses on the receivers.

In another aspect, implementations include a computer system comprising one or more computer processors configured to perform operations of: generating a first data structure encoding a configuration of a buried pipeline and a tool, wherein the buried pipeline comprises a metal wall enclosing an interior space, wherein the tool is part of a smart pipeline intervention gauge (PIG) device configured to navigate the buried pipeline from inside the interior space, wherein the tool comprises a transmitter and multiple receivers, and wherein the multiple receivers are circumferentially positioned in the interior space and separated from the metal wall; obtaining a second data structure encoding a solver configured to simulate a response on one of the multiple receivers from inside the metal wall of the buried pipeline; applying the solver using the configuration of the buried pipeline and the tool when the transmitter sends a known electromagnetic (EM) waveform inside the metal wall of the buried pipeline; generating simulated responses on the multiple receivers from inside the metal wall of the buried pipeline; based on, at least in part, the simulated responses, training an inference model configured to predict the wall-loss condition of a particular buried pipeline; and storing a third data structure encoding the inference model on the smart PIG device so that when the smart PIG device navigates the particular buried pipeline and obtains measurement data inside the particular buried pipeline, the inference model predicts the wall-loss condition of the particular buried pipeline using the measurement data.

Implementations may include one or more of the following features.

The training may further include: calibrating the inference model by comparing the predicted wall-loss condition with a physically observed wall-loss condition of the particular buried pipeline. The training may further include: adjusting the inference model to reduce a difference between the predicted wall-loss condition and the physically observed wall-loss condition. The wall-loss condition comprises a partially corroded circumference of the metal wall. The partially corroded circumference corresponds to at least one of: a corrosion from inside the metal wall, a corrosion from outside the metal wall, or a total loss of the metal wall.

The inference model may include: multiple layers of artificial neural network (ANN). The solver may include: a physics-based solver. The first data structure may prescribe a boundary condition of the buried pipeline for the solver to compute responses on the receivers.

In yet another aspect, implementations may include a non-transitory computer-readable medium comprising software instructions, which, when executed by a computer, causes the computer to perform operations of: generating a first data structure encoding a configuration of a buried pipeline and a tool, wherein the buried pipeline comprises a metal wall enclosing an interior space, wherein the tool is part of a smart pipeline intervention gauge (PIG) device configured to navigate the buried pipeline from inside the interior space, wherein the tool comprises a transmitter and multiple receivers, and wherein the multiple receivers are circumferentially positioned in the interior space and separated from the metal wall; obtaining a second data structure encoding a solver configured to simulate a response on one of the multiple receivers from inside the metal wall of the buried pipeline; applying the solver using the configuration of the buried pipeline and the tool when the transmitter sends a known electromagnetic (EM) waveform inside the metal wall of the buried pipeline; generating simulated responses on the multiple receivers from inside the metal wall of the buried pipeline; based on, at least in part, the simulated responses, training an inference model configured to predict the wall-loss condition of a particular buried pipeline; and storing a third data structure encoding the inference model on the smart PIG device so that when the smart PIG device navigates the particular buried pipeline and obtains measurement data inside the particular buried pipeline, the inference model predicts the wall-loss condition of the particular buried pipeline using the measurement data.

Implementations may include one or more of the following features.

The training may further include: calibrating the inference model by comparing the predicted wall-loss condition with a physically observed wall-loss condition of the particular buried pipeline. The training may further include: adjusting the inference model to reduce a difference between the predicted wall-loss condition and the physically observed wall-loss condition. The wall-loss condition comprises a partially corroded circumference of the metal wall. The partially corroded circumference corresponds to at least one of: a corrosion from inside the metal wall, a corrosion from outside the metal wall, or a total loss of the metal wall.

The inference model may include: multiple layers of artificial neural network (ANN). The solver may include: a physics-based solver. The first data structure may prescribe a boundary condition of the buried pipeline for the solver to compute responses on the receivers.

Implementations according to the present disclosure may be realized in computer implemented methods, hardware computing systems, and tangible computer readable media. For example, a system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

The details of one or more implementations of the subject matter of this specification are set forth in the description, the claims, and the accompanying drawings. Other features, aspects, and advantages of the subject matter will become apparent from the description, the claims, and the accompanying drawings.

### DESCRIPTION OF DRAWINGS

Figs. 1A and 1B illustrate examples that incorporate AI-powered analytics and EM-based sensors according to an implementation of the present disclosure.
Fig. 2 illustrates an example for characterizing defects according to sizes.
Fig. 3 illustrates three flow charts to compare and contrast some implementations according to an implementation of the present disclosure with other approaches.
Figs. 4A - 4B illustrate examples of building the inference model and applying the inference model according to an implementation of the present disclosure.
Figs. 5A and 5B show flow charts illustrating examples of processes according to an implementation of the present disclosure.
Fig. 6 is a block diagram illustrating an example of a computer system used to provide computational functionalities associated with described algorithms, methods, functions, processes, flows, and procedures, according to an implementation of the present disclosure.

Like reference numbers and designations in the various drawings indicate like elements.

### DETAILED DESCRIPTION

The disclosed technology is directed to systems and methods for inspecting pipelines using artificial intelligence (Al) to drive electromagnetics (EM) based sensing modules, which are integrated with pipeline intervention gadgets/gauges (PIGs). The present disclosure describes a new and breakthrough AI powered technology tuned to the detection of defects (e.g., wall-loss) in buried and PIG-able pipelines. Various implementations can address the increasingly urgent industrial challenges concerning the identification of degradation in wall-thickness of pipelines. The implementations generally combine Al with EM based sensing tools to significantly enhance the sensitivity of detecting a likelihood of anomalies in buried pipelines. At the same time, the implementations can achieve higher accuracy in terms of positive detection rates when compared to current practices and at a much lower cost. In these implementations, the smart feature are capable of being attached to (and/or integrated into) cleaning PIGs in order to capitalize on routine cleaning procedures and processes to facilitate: ease of technology deployment, cost-effectiveness, and solution-scalability. Various implementations can provide, for the first time, the dual functionality for both cleaning and inspection in one unified system with reporting capabilities in almost real-time. The implementations can also facilitate a near real-time response on the health status of inspected pipelines, via AI, as opposed to latencies on the order of several weeks that are associated with current practices. In sum, various implementations can provide the following features: higher accuracy, lower costs, contactless sensing, untethered implementation, dual functionality, near real-time reporting, data processing and analytics platform.

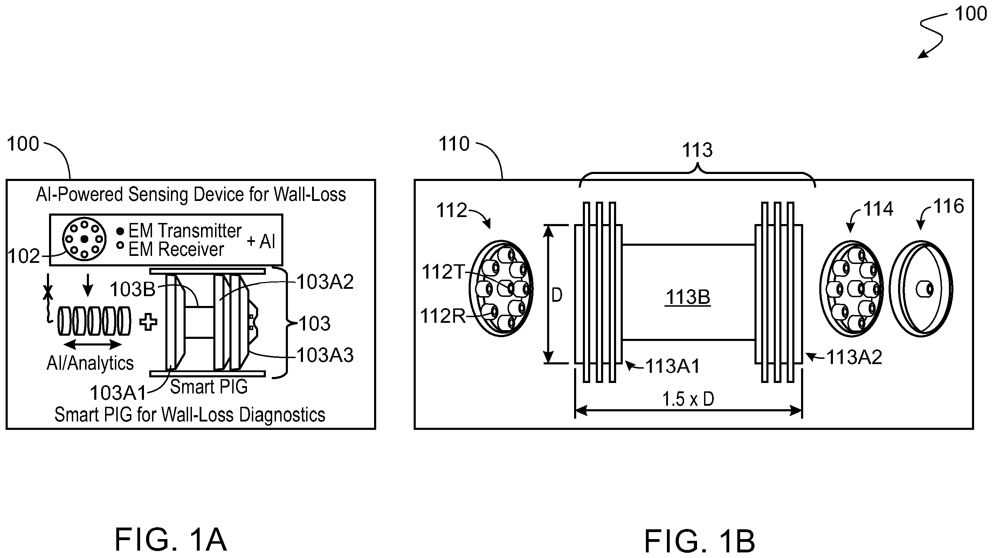

Referring to Figs. 1A and 1B, various implementations incorporate Al-powered analytics and EM-based sensors on pipeline intervention gadgets or gauges (known as PIGs or scrappers). The implementations are designed for the detection of wall-loss in buried and PIG-able metallic pipelines, using Al and EM based sensing, with the objective of reaching detection rates higher than currently achieved with existing practices, and at significantly lower operational costs.

Fig. 1A shows a diagram 100 of a system according to some implementations while Fig. 1B shows a diagram 110 illustrating a PIG module 112 and capsules 114, and 116 positioned at the front and/or back. As illustrated, capsules 112 and 114 incorporate a combination of electromagnetic (EM) transmitters and receivers while capsule 116 incorporates receivers only. These capsules equipped with EM transmitters and/or receivers are designed to be attached to a PIG device 113 as the PIG device is carried through the pipeline 113B. The capsules can be retrofitted to a PIG device 113 in the illustration, which has a length. L. measured in relation to the diameter, D. of the target pipeline 113B at a rate of L=1.5xD. For example, when D=24", this leads to L=1.5x24"=36". Here, the transmitters and receivers are located at the front (113A1) and/or the back end (113A2) of a PIG, and are optimized for maximum performance efficiency. In one illustration, the transmitter, responsible for emitting the initial electromagnetic signal for inspection of the target pipeline, is configured to operate at a frequency selected to interact with the material composition of the target pipeline113B with sufficient penetration depth to inspect the integrity of the wall. In some cases, the material composition includes carbon steel, for example API 5L X60. The receivers, responsible for collecting the transmitted signal after its interaction with the wall of the target pipeline, are configured to couple to this transmitted signal interacting with the wall in a manner that decouples and distinguishes a defected segment of the pipe from those that are not. In return, the physical sizes and dimensions of the transmitters and receivers are also optimized not only to respond to the presence of a defect in the wall of the pipe, but to also distinguish the defects of varying sizes.

In some implementations, capsules 102, 112, 114, and 116 can be mounted at the front end (e.g., 103Al. 113A1) or the back end (e.g., 103A2, 103A3, 113A2) of a PIG module (e.g., 103, 113). For example, capsules 102, 112, 114, and 116 can be coaxially mounted with respect to the PIG module. As illustrated, the transmitter (e.g., 112T) can be mounted towards the center of the capsule, which emits EM signals in the form of, for example, pulsed waveforms, or almost continuous wave (CW). For example, when operating at a frequency of 100kHz, the EM signals can be emitted with a repetition rate of around 10Hz, and each emission involves a burst that is around 1ms in duration. These parameters can be modified. The transmitter can be configured as a coiled antenna, a dipole antenna, or a combination thereof. The radiation pattern of the transmitter can be omni-directional in the circumferential aspect so that the cross-section of the pipe (e.g.. 103B, 113B) that is co-planar with the capsule receives relatively uniform EM radiation. Additionally or alternatively, the transmitter can more preferentially radiate a portion of the cross-section than other portions of the cross-section, and/or all circumferential aspects of the cross-section. In the focused arrangement, the transmitter can be rotated about the axis of the capsule to radiate all circumferential aspects of the cross-section.

The receivers (e.g., 112R) may be positioned on the circumference of the capsule to be in close proximity to, but without contacting, the inner surface of the pipe. In some cases, the receivers may be evenly distributed around the circumference of the capsule. The receivers may be stationary and spaced at equal distance from the transmitter. The receivers may be tuned to encompass a larger bandwidth than the transmitter. The receivers are configured to receive EM signals in response to radiated EM signal from the transmitter in the surrounding of the inner wall of the pipe for the assessment of the integrity of the wall, where losses in the inner and outer surfaces as well as full wall-losses, can significantly affect the reception. Indeed, the implementations can assess situations varying from inner and outer surface losses (e.g., erosion) to full wall-losses (e.g., total loss).

Implementations may leverage data obtained from simulation-based solvers that mimic field conditions, which can be combined with field data where needed, to train artificial neural networks (ANNs), to generate models that predict conditions of the pipe wall. Such models can greatly reduce the reliance on direct data acquisition from the field. For example, the Al-analytics can incorporate physics-based solvers which simulate receiver readings based on a given cross-sectional status of the pipe wall. As illustrated in Fig. 1A, and further explained below, the ANN can be trained to provide a model that can predict receiver readings based on a given defect condition. Using the ANN model, the implementations can analyze and compare the received signals from receivers on capsules 102, 112, 114, and 116 to infer a status of the wall of the pipe being inspected.

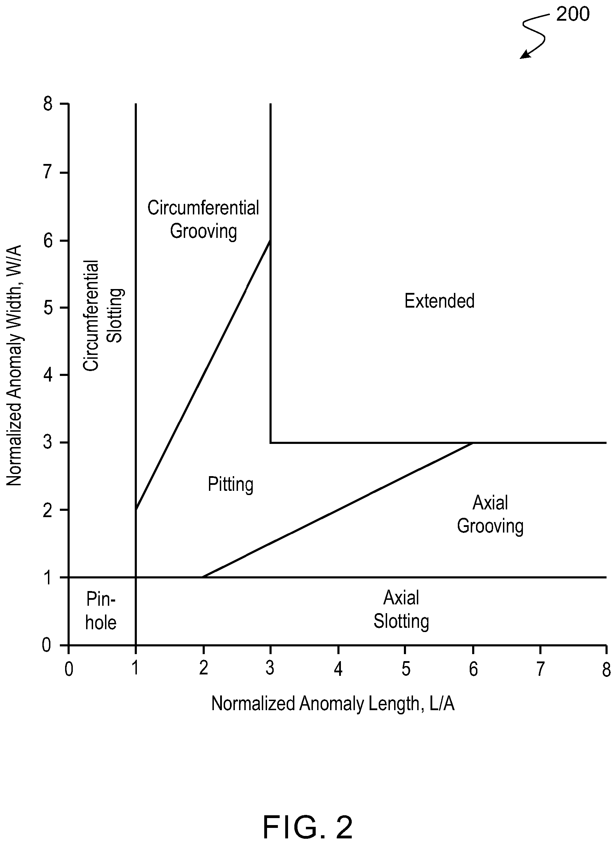

Fig. 2 illustrates an example for characterizing defects according to sizes. In the illustration, the smallest surface area size that needs to be detected can be on the order of A×Amm². In one example, A=12.7mm, which is defined in relation to the thickness, *t*, of the target pipeline. As illustrated, defects with surface area that fall within the range of A×Amm² are referred to as pinholes. The ability to detect and identify pinholes is of particular challenge, as this reflects the sensitivity of a detection/identification methodology. Various implementations are capable of achieving pinhole detection by a judicious selection and optimization of parameters that include, for example, the operating frequency and the combination of the transmitter-receiver configuration (e.g., specific particulars of the sizes, the arrangement, and the spacing from each other).

Notably, the implementations that mount the illustrated transmitters and receivers within a PIG can lead to more compact design than conventional inline inspection (ILI) tools. Additionally, the implementations also function and operate using different physical and mechanical principles than existing ILI tools. For example, one widely adopted mechanism is Magnetic Flux Leakage (MFL) in which large magnet/s is employed to create a saturated magnetic field on the walls of the steel pipes, leading to very heavy and bulky packages on the order of 500Kg and more than 5-6 meters long. The presence of defects can generate leaked flux, which can then be sensed by a sensor or a coil placed near the wall of the pipe. Although widely used, MFL-based devices only achieve a limited rate of success to identify defects, such as pinholes. Furthermore, according to empirical reports obtained from the field, MFL-based devices also tend to have high false positive (FP) rates for flagging defects that do not exist, and high false negative (FN) rates (for missing defects that actually exist). The FP instances translate into unjustified excavation and verification efforts that would not pay off, despite the high upfront cost. The impact of FN instances can be even more severe when the omission results in high likelihood of pipelines failures and product leak, which can significantly impact the reliability of operations.

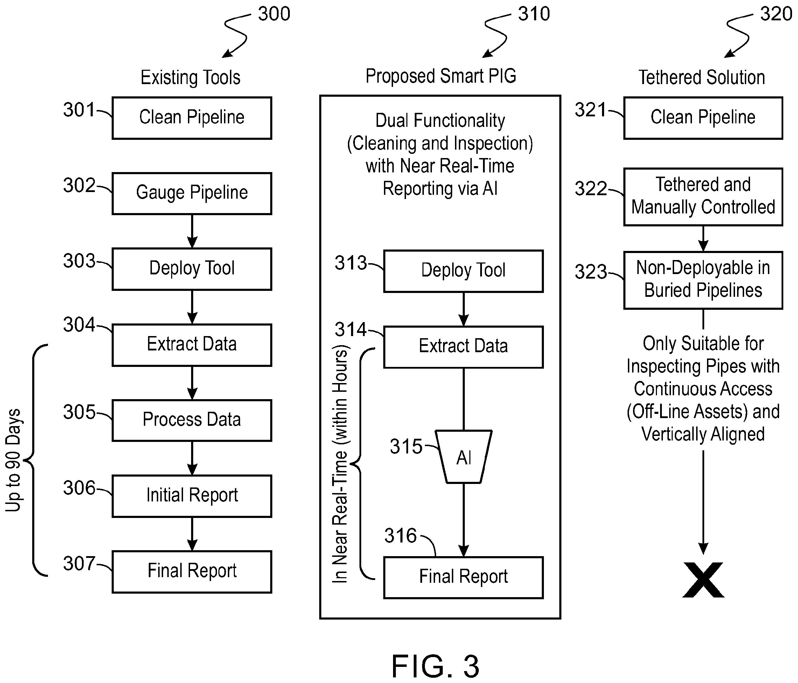

Fig. 3 illustrates flow charts 300, 310, and 320 that compare and contrast implementations of the present disclosure with other approaches. Pipelines may undergo a cleaning operation, on a rate of, for example, a monthly basis, to remove and reduce the accumulation of contaminating foreign bodies and debris within and/or on the inner surfaces of pipelines. In flow chart 300, this step (301) is referred to as Clean pipeline, which is currently performed independently of the inspection practice. In terms of the deployment of inspection tools, given the high costs and heavy investment required for building such devices, the inspection tools may rarely be deployed at a first run. To this end, a pre-test run may often be executed first in order to test that it may be safe to deploy a given tool, which is referred to as a Gauging step (302) to gauge pipeline. This Gauging step (302) may take exactly the same duration as a direct deployment of an inline inspection (ILI) tool, which is also executed at every inspection; therefore, can run on the order of 24-28 hours. Flow chart 300 additionally illustrates that the ILI tool is deployed (303). When tool is successfully launched, navigated throughout the entire length of a pipeline, and received in recovery, the data corresponding to the sensors' reading then undergo data extraction step (304). The full process of launching, navigating, and recovering is hardly a straightforward feat due to the weights and sizes of such tools. The processing step (305) of this extracted data may generally require engineers with specialized handling skills in addition to specialized tools and strict vendor know-how. Furthermore, these aforementioned intricate steps, along with a final outcome and reporting step (307) on the healthiness of the inspected pipeline can take up to 90 days (from the time of deployment to final report (307)). An intermediate Initial report (306) can also be produced within 24-48 hours: however, with limited details.

The report step under flow chart 300 is a very lengthy process, which can be cumbersome in critical and/or out-of-schedule inspection cases, where a fast response is particularly beneficial. In comparison, flow chart 310 can leverage recent advancements made in industrial revolution (IR) 4.0 and Al to significantly advance and streamline the overall workflow of such technologies. For example, flow chart 310 depicts the potential of combining inspection with cleaning routines, as well as eliminating the requirement for a Gauging step. As illustrated, when the smart ILI tool is deployed (313) into the pipelines, data is extracted (314), an Al-enabled analytic engine can be triggered to process the extracted data (315), and the final report (316) may subsequently be generated in near real-time (e.g., within hours). As illustrated, the improvement can result in at least a 50% reduction in pipeline maintenance costs, associated time, and all required resources. Flow chart 310 illustrates an untethered release of a smart ILI tool that autonomously navigates buried pipelines. During the navigated journey that traverses the path of the buried pipelines, receivers on the smart ILI tool are generally placed in non-contact positions relative to the inner wall of the pipelines. In comparison, flow chart 320 shows a tethered solution where a vehicle is launched to clean (321) the pipelines (e.g.. the vertical wall of a wellbore). During the cleaning process, the vehicle is tethered to the release port above the wellbore so that the vehicle is manually controlled (322). As indicated, this tethered solution is non-deployable in buried pipelines with convoluted paths (323). The tethered solution is only suitable for inspecting pipes that can accommodate continuous access after the vehicle is released. Such tethered solution may be applicable to vertically aligned wellbore with a straight trajectory allowing for continuous access to the vehicle and off-line analysis of the extracted data.

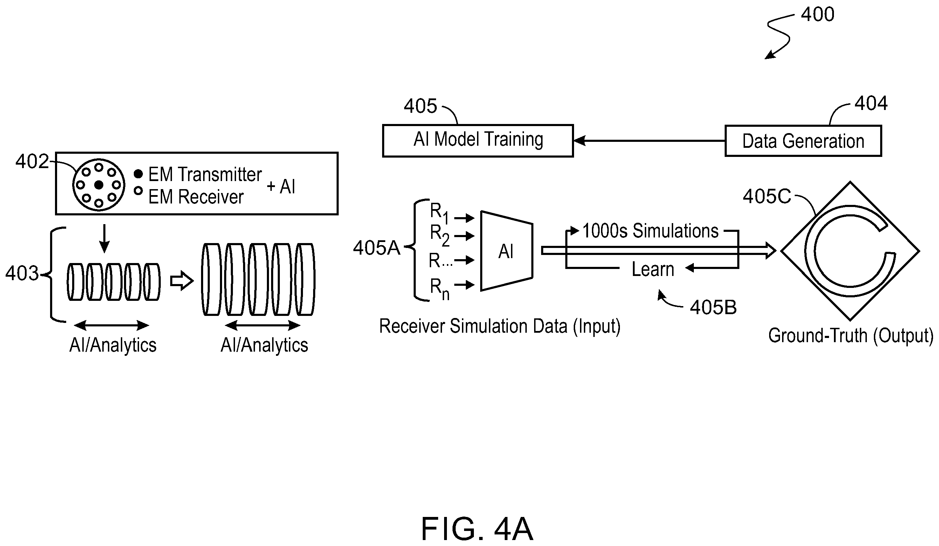

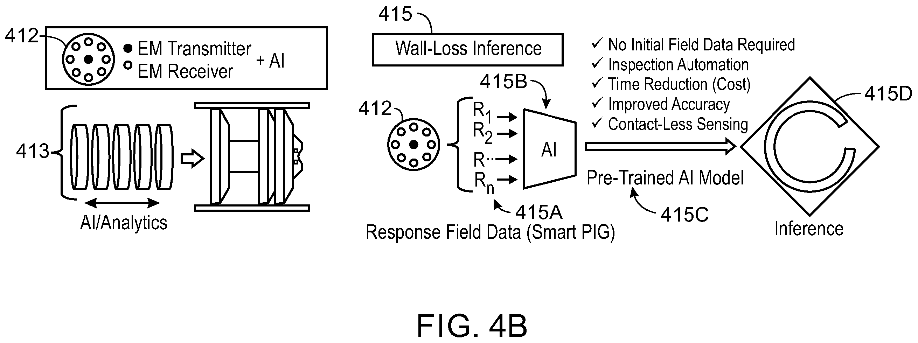

As discussed above in association with Figs. 1A and 1B, the implementations incorporate simulation-based solvers (driven by EM physics) that mimic field conditions. Further referring to Figs. 4A-4B, using these solvers, sensor data (received on receivers) can be obtained from simulations where the defect of the wall is known beforehand. Diagram 400 illustrates an example in which an AI model is being trained. The training process may apply a configuration of capsule 402 that includes transmitters and receivers arranged in pre-determined positions. For example, the transmitter may be located at the center while multiple receivers may be positioned along the circumference, but without contacting the inner wall of the pipelines being inspected. Based on the arrangement of transmitter and receivers, Al analytics (403) may be launched to train a model using simulated data. Data generation 404 may simulate sensor data that would be collected on the receivers in response to EM waveforms emitted by the transmitter in the context of various defect patterns. For example, the simulation may sensor responses when sensors are positioned in known arrangements to receive responses from defect patterns that are prescribed for the simulation. A defect pattern, along with other parameters (such as conductivity and permeability of the wall material, boundary condition of the surrounding soil), can give rise to simulated sensor data that would be obtained from the receivers. The AI model training process 405 can start with seed values for received sensor data (e.g., 405A illustrating R₁ to Rₙ). The sensor data may be subject to an AI-powered learning process 405B to build and train the Al model that identifies the specific instance of sensor data that correspond to defect pattern 405C, which has been prescribed as an object of the model. In other words, the learning process may train an Al model that identifies, when given a corrosion or wall-loss pattern on the wall of the pipeline, the boundary condition of the pipeline, and the particular waveform driving the transmitter, the corresponding voltage signals on the receivers (e.g., R₁ to Rₙ). The learning process may incorporate, for example, a simulation-based solver. Hence, by varying wall-loss patterns that mimics field conditions of all types of wall defects, the corresponding voltage signals on the receivers can be simulated, and hence artificial neural networks (ANNs) can be trained. Various implementations may also combine with field data to, for example, calibrate the solver's output, or validate the prediction of the ANNs.

Diagram 410 illustrates an example for applying the trained AI model to provide inspection and inference. As illustrated, capsule 412 is similarly arranged with a transmitter and multiple receivers, like capsule 402 in Fig. 4A. Based on an instance of physically received sensor data on the receivers, the process can apply the trained AI model to predict the corresponding corrosion pattern (413). As outlined in Fig. 4A, the AI model is trained based on a pipeline model with a corrosion pattern to derive the sensor data that would correspond to such corrosion pattern. Using the instance of received sensor data (413) from capsule 412, the inspection and inference process may apply an Al-powered analysis (415B) that is based on the AI model (415C) that has been trained under diagram 400. The result is an inference of the corrosion pattern (415D) that would correspond to the instance of received sensor data.

Because the inference is made online based on an AI model generated using simulated data, the implementations can thus significantly reduce the reliance on direct data collection from the field. Not only can these implementations dramatically speed up the model development process, but also allow for the modularity and scalability in considering various scenarios with equal validity and without relying on the availability of field data to represent such varied circumstances. Here, modularity refers to the ability for components (such as each solver) to be swappable/exchangeable. Scalability refers to the use of additional receivers or array of receivers. Moreover, the implementations can reduce data bias significantly. As discussed above, the simulated sensor data is generated based on mechanistic models designed to mimic the field conditions of a buried pipeline, and obtained from well-established solvers that predicts sensor readings for a plethora of different several scenarios of defects. The mechanistic models can account for varying field conditions. Importantly, this integration of the data readings from array sensor responses with specifically tailored AI-driven algorithms allows for the accurate correlation with (and hence prediction of) defect percentages across various experimental setups when the experimental field conditions have been covered by simulations during model training. Using this integrated system where the custom-made Al-driven algorithms are directly applied to process data from the sensors, and without relying on a specialized know-how for a particular type of PIG device, can lead to both an improved detection rate and a reduced time to report. For example, the reporting can be performed in near real-time, i.e. within hours as opposed to up to 90 days as currently is the case.

In one example, the implementations can achieve solution modularity and scalability of the AI-EM sensing module, both in terms of software (SW) and hardware (HW) capability. Specifically, the implementations can allow for easy adaptation to a multitude of geometrical and material constructions of the underlying pipeline being investigated. Moreover, the implementations can achieve the detection of defects that include not only clean cuts (for example, squares and circles) but also for those that naturally and organically occur and manifest spatial variations in both depth and breadth of damages. For example, the ANN models are trained to factor in defect variations in both depth and breadth of the cross-section of the inner, outer, or full wall-loss.

In another example, this scalable and modular AI-EM sensing module is engineered to be attachable to a PIG device so that the integrated system can form a selfsustained and autonomous design and product. Indeed, the smart PIG can function like a drone-type device to traverse buried pipelines autonomously. The capabilities and functionalities of smart PIG are engineered for high accuracy detection rates on the likelihood of anomalies in pipelines. The PIG device can be selected based on the specifications and practices used in the targeted oil and gas fields. Such selection can further promote: ease of technology deployment, cost-effectiveness, and solution-scalability.

In yet another example, scalable and modular AI-EM sensing module can be designed to meet operational requirements for pipeline cleaning and inspection, with enhanced performance in both detection accuracy and costs. The module leverages the AI capabilities to characterize the health of inspected assets in near real-time response. The module also provides a data platform, whereby data collected from the field can also be utilized to feed into the AI learning where needed. The module can further incorporate data analytics with predictive functionality on the long-term health of pipelines and their integrity.

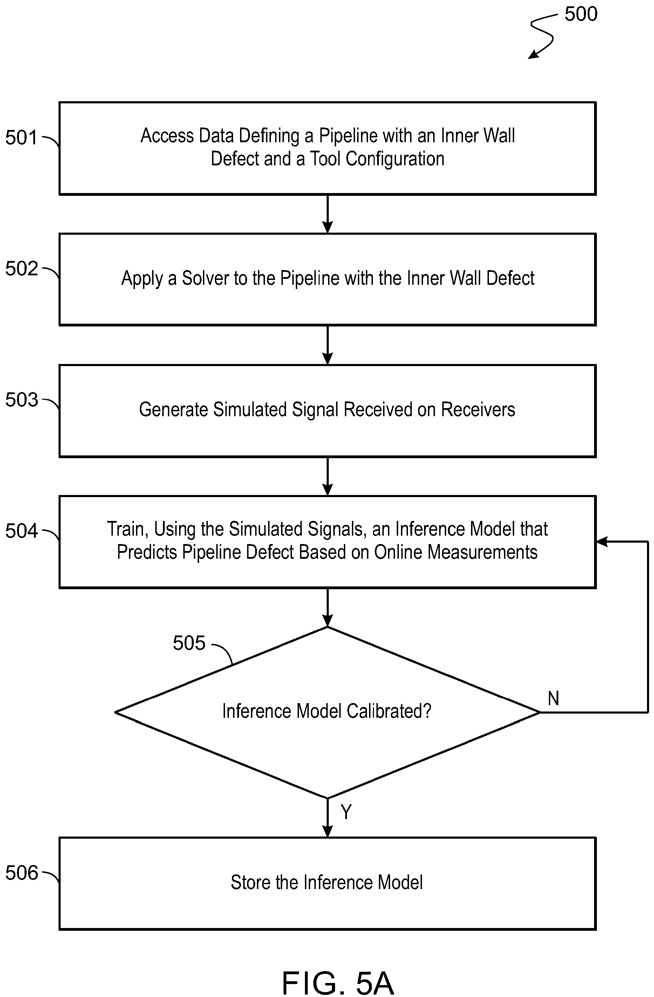

Fig. 5A is a flow chart 500 illustrating an example of a process according to some implementations. The process may start with accessing data defining a buried pipeline that includes a wall defect as well as a tool configuration (501). The tool configuration specifies the arrangement of, for example, a transmitter and multiple receivers on a capsule attached to a PIG device. As described above, the transmitter may be positioned at a central position while the receivers are located on the circumference but without contacting the inner wall of the buried pipeline. The buried pipeline may be composed of a particular metal material (e.g., steel). The buried pipeline, as defined in the data, may include one or more wall defects. The data may further prescribe a boundary condition of the buried pipeline.

The process may then apply a solver to the defined pipeline when a particular EM waveform is transmitted from the transmitter (502). The solver can compute, based on the prescribed wall defect, the responsive signals that would be collected by the receivers (503). Because the solver computes simulated sensor data from multiple receivers, the simulated sensor data is capable of revealing the spatial extent and depth of the wall defect (both circumferentially and radially). Moreover, the solver may also be applied in instances where the transmitter is rotated axially in which a portion or all the circumference is irradiated.

Using the simulated responsive signals, the process may train an inference model capable of predicting pipeline defects (504). The inference model may incorporate an artificial neural network (ANN) with, for example, multiple layers of weighing network. While the inference model may be trained using simulated sensor data responsive to known defect patterns, the inference model can predict the spatial and depth pattern of a wall defect (both circumferentially and radially), when presented with actual measurement data from the receivers.

In some cases, the training can involve a calibration procedure. For example, the inferred defect may be compared with the known defect, and the difference, if any, may be used as feedback to further fine-tune the inference model. In this example, the process may determine whether the inference model has been calibrated (505). If the determination is that the inference model has been calibrated, the process may proceed to storing the inference model (506). If the determination is that the inference model has not been calibrated, for example, when calibration test results are not satisfactory, the process may return to additional training to fine tune the inference model.

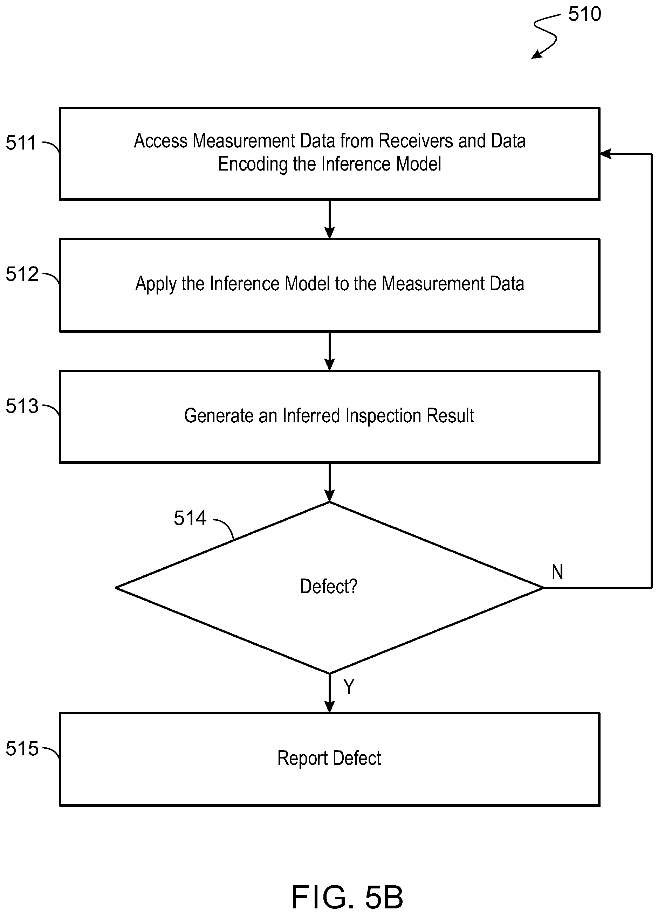

Fig. 5B is another flow chart 510 illustrating an example of a process according to some implementations. The process may release a smart PIG device into buried pipelines. The smart PIG device may be equipped with the capsule containing a transmitter and multiple receivers. The smart PIG is capable of navigating the buried pipelines, and performing inspection using the inference model in an autonomous manner. As illustrated, the process may access measurement data obtained from the receivers and date encoding the inference model (511). The measurement data may be physically received in response to a transmission of a particular EM waveform from the transmitter. The inference model may be built and trained, as illustrated in Fig. 5A. The process may then apply the inference model to the measurement data (512). The process may then generate an inferred inspection result for the buried pipeline at the particular location (513). The inspection result may include a spatial depiction of the cross section of the buried pipeline at the particular location. The inspection result may be analyzed to determine whether the cross section has a wall defect (514). If the defect is identified, the process may report the defect (515). For example, the process may flag the defect to the attention of an operator. If no defect is identified, the process may continue collecting measurement data as the smart PIG device continues to navigate through the buried pipeline.

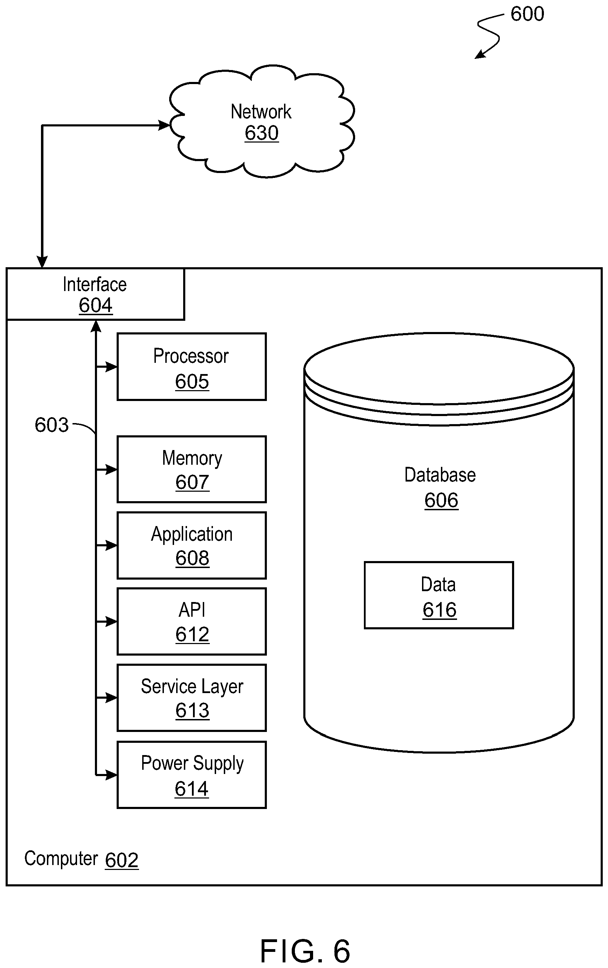

Fig. 6 is a block diagram illustrating an example of a computer system 600 used to provide computational functionalities associated with described algorithms, methods, functions, processes, flows, and procedures, according to an implementation of the present disclosure. The illustrated computer 602 is intended to encompass any computing device such as a server, desktop computer, laptop/notebook computer, wireless data port, smart phone, personal data assistant (PDA), tablet computing device, one or more processors within these devices, another computing device, or a combination of computing devices, including physical or virtual instances of the computing device, or a combination of physical or virtual instances of the computing device. Additionally, the computer 602 can comprise a computer that includes an input device, such as a keypad, keyboard, touch screen, another input device, or a combination of input devices that can accept user information, and an output device that conveys information associated with the operation of the computer 602, including digital data, visual, audio, another type of information, or a combination of types of information, on a graphical-type user interface (UI) (or GUI) or other UI.

The computer 602 can serve in a role in a computer system as a client, network component, a server, a database or another persistency, another role, or a combination of roles for performing the subject matter described in the present disclosure. The illustrated computer 602 is communicably coupled with a network 603. In some implementations, one or more components of the computer 602 can be configured to operate within an environment, including cloud-computing-based, local, global, another environment, or a combination of environments.

The computer 602 is an electronic computing device operable to receive, transmit, process, store, or manage data and information associated with the described subject matter. According to some implementations, the computer 602 can also include or be communicably coupled with a server, including an application server, e-mail server, web server, caching server, streaming data server, another server, or a combination of servers.

The computer 602 can receive requests over network 603 (for example, from a client software application executing on another computer 602) and respond to the received requests by processing the received requests using a software application or a combination of software applications. In addition, requests can also be sent to the computer 602 from internal users, external or third-parties, or other entities, individuals, systems, or computers.

Each of the components of the computer 602 can communicate using a system bus 603. In some implementations, any or all of the components of the computer 602, including hardware, software, or a combination of hardware and software, can interface over the system bus 603 using an application programming interface (API) 612, a service layer 613, or a combination of the API 612 and service layer 613. The API 612 can include specifications for routines, data structures, and object classes. The API 612 can be either computer-language independent or dependent and refer to a complete interface, a single function, or even a set of APIs. The service layer 613 provides software services to the computer 602 or other components (whether illustrated or not) that are communicably coupled to the computer 602. The functionality of the computer 602 can be accessible for all service consumers using this service layer. Software services, such as those provided by the service layer 613, provide reusable, defined functionalities through a defined interface. For example, the interface can be software written in JAVA, C++, another computing language, or a combination of computing languages providing data in extensible markup language (XML) format, another format, or a combination of formats. While illustrated as an integrated component of the computer 602, alternative implementations can illustrate the API 612 or the service layer 613 as stand-alone components in relation to other components of the computer 602 or other components (whether illustrated or not) that are communicably coupled to the computer 602. Moreover, any or all parts of the API 612 or the service layer 613 can be implemented as a child or a sub-module of another software module, enterprise application, or hardware module without departing from the scope of the present disclosure.

The computer 602 includes an interface 604. Although illustrated as a single interface 604 in Fig. 6, two or more interfaces 604 can be used according to particular needs, desires, or particular implementations of the computer 602. The interface 604 is used by the computer 602 for communicating with another computing system (whether illustrated or not) that is communicatively linked to the network 603 in a distributed environment. Generally, the interface 604 is operable to communicate with the network 603 and comprises logic encoded in software, hardware, or a combination of software and hardware. More specifically, the interface 604 can comprise software supporting one or more communication protocols associated with communications such that the network 603 or interface's hardware is operable to communicate physical signals within and outside of the illustrated computer 602.

The computer 602 includes a processor 605. Although illustrated as a single processor 605 in Fig. 6, two or more processors can be used according to particular needs, desires, or particular implementations of the computer 602. Generally, the processor 605 executes instructions and manipulates data to perform the operations of the computer 602 and any algorithms, methods, functions, processes, flows, and procedures as described in the present disclosure.

The computer 602 also includes a database 606 that can hold data for the computer 602, another component communicatively linked to the network 603 (whether illustrated or not), or a combination of the computer 602 and another component. For example, database 606 can be an in-memory, conventional, or another type of database storing data consistent with the present disclosure. In some implementations, database 606 can be a combination of two or more different database types (for example, a hybrid in-memory and conventional database) according to particular needs, desires, or particular implementations of the computer 602 and the described functionality. Although illustrated as a single database 606 in Fig. 6, two or more databases of similar or differing types can be used according to particular needs, desires, or particular implementations of the computer 602 and the described functionality. While database 606 is illustrated as an integral component of the computer 602, in alternative implementations, database 606 can be external to the computer 602. As illustrated, the database 606 holds the previously described data 616 including, for example, data encoding the inference model, the solver, the prescribed defect patterns, simulated sensor data, and actual measurement data from the receivers.

The computer 602 also includes a memory 607 that can hold data for the computer 602, another component or components communicatively linked to the network 603 (whether illustrated or not), or a combination of the computer 602 and another component. Memory 607 can store any data consistent with the present disclosure. In some implementations, memory 607 can be a combination of two or more different types of memory (for example, a combination of semiconductor and magnetic storage) according to particular needs, desires, or particular implementations of the computer 602 and the described functionality. Although illustrated as a single memory 607 in Fig. 6, two or more memories 607 or similar or differing types can be used according to particular needs, desires, or particular implementations of the computer 602 and the described functionality. While memory 607 is illustrated as an integral component of the computer 602, in alternative implementations, memory 607 can be external to the computer 602.

The application 608 is an algorithmic software engine providing functionality according to particular needs, desires, or particular implementations of the computer 602, particularly with respect to functionality described in the present disclosure. For example, application 608 can serve as one or more components, modules, or applications. Further, although illustrated as a single application 608, the application 608 can be implemented as multiple applications 608 on the computer 602. In addition, although illustrated as integral to the computer 602, in alternative implementations, the application 608 can be external to the computer 602.

The computer 602 can also include a power supply 614. The power supply 614 can include a rechargeable or non-rechargeable battery that can be configured to be either user- or non-user-replaceable. In some implementations, the power supply 614 can include power-conversion or management circuits (including recharging, standby, or another power management functionality). In some implementations, the powersupply 614 can include a power plug to allow the computer 602 to be plugged into a wall socket or another power source to, for example, power the computer 602 or recharge a rechargeable battery.

There can be any number of computers 602 associated with, or external to, a computer system containing computer 602, each computer 602 communicating over network 603. Further, the term "client," "user," or other appropriate terminology can be used interchangeably, as appropriate, without departing from the scope of the present disclosure. Moreover, the present disclosure contemplates that many users can use one computer 602, or that one user can use multiple computers 602.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal, for example, a machine-generated electrical, optical, or electromagnetic signal that is generated to encode information for transmission to a receiver apparatus for execution by a data processing apparatus. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be, or further include special purpose logic circuitry, for example, a central processing unit (CPU), an FPGA (field programmable gate array), or an ASIC (application-specific integrated circuit). In some implementations, the data processing apparatus or special purpose logic circuitry (or a combination of the data processing apparatus or special purpose logic circuitry) can be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with an operating system of some type, for example LINUX, UNIX, WINDOWS, MAC OS, ANDROID, IOS, another operating system, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and apparatus can also be implemented as, special purpose logic circuitry, for example, a CPU, an FPGA, or an ASIC.

Computers for the execution of a computer program can be based on general or special purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device.

Non-transitory computer-readable media for storing computer program instructions and data can include all forms of media and memory devices, magnetic devices, magneto optical disks, and optical memory device. Memory devices include semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. Magnetic devices include, for example, tape, cartridges, cassettes, internal/removable disks. Optical memory devices include, for example, digital video disc (DVD), CD-ROM, DVD+/-R, DVD-RAM, DVD-ROM, HD-DVD, and BLURAY, and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special purpose logic circuitry.

To provide for interaction with a user, implementations of the subject matter described in this specification can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity, a multitouch screen using capacitive or electric sensing, or another type of touchscreen. Other types of devices can be used to interact with the user. For example, feedback provided to the user can be any form of sensory feedback. Input from the user can be received in any form, including acoustic, speech, or tactile input. In addition, a computer can interact with the user by sending documents to and receiving documents from a client computing device that is used by the user.

The term "graphical user interface,'' or "GUI," can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a plurality of user interface (UI) elements, some or all associated with a web browser, such as interactive fields, pulldown lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.11x and 802.20 or other protocols consistent with the present disclosure), all or a portion of the Internet, another communication network, or a combination of communication networks. The communication network can communicate with, for example, Internet Protocol (IP) packets, Frame Relay frames, Asynchronous Transfer Mode (ATM) cells, voice, video, data, or other information between networks addresses.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of what can be claimed, but rather as descriptions of features that can be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. It should be noted and understood that there can be improvements and modifications made of the present invention described in detail above without departing from the scope of the invention as set forth in the accompanying claims.

While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method for maintaining buried pipelines subject to a wall-loss condition, the method comprising:
generating a first data structure encoding a configuration of a buried pipeline and a tool, wherein the buried pipeline comprises a metal wall enclosing an interior space, wherein the tool is part of a smart pipeline intervention gauge, PIG, device (113) configured to navigate the buried pipeline from inside the interior space, wherein the tool comprises a transmitter (112T, 114) and multiple receivers (112R, 114, 116), and wherein the multiple receivers are circumferentially positioned in the interior space and separated from the metal wall;
the method being **characterized in**
obtaining a second data structure encoding a solver configured to simulate a response on one of the multiple receivers from inside the metal wall of the buried pipeline;
applying (502) the solver using the configuration of the buried pipeline and the tool when the transmitter sends a known electromagnetic, EM, waveform inside the metal wall of the buried pipeline;
generating (503) simulated responses on the multiple receivers from inside the metal wall of the buried pipeline;
based on, at least in part, the simulated responses, training (504) an inference model configured to predict the wall-loss condition of a particular buried pipeline; and
storing (506) a third data structure encoding the inference model on the smart PIG device so that when the smart PIG device navigates the particular buried pipeline and obtains measurement data inside the particular buried pipeline, the inference model predicts the wall-loss condition of the particular buried pipeline using the measurement data.

2. The computer-implemented method of claim 1, wherein the training further comprises:
calibrating the inference model by comparing the predicted wall-loss condition with a physically observed wall-loss condition of the particular buried pipeline.

3. The computer-implemented method of claim 2, wherein the training further comprises:
adjusting the inference model to reduce a difference between the predicted wall-loss condition and the physically observed wall-loss condition.

4. The computer-implemented method of claim 1, wherein inference model comprises multiple layers of artificial neural network, ANN.

5. The computer-implemented method of claim 1, wherein the solver comprises a physics-based solver.

6. The computer-implemented method of claim 1, wherein the first data structure prescribes a boundary condition of the buried pipeline for the solver to compute responses on the receivers.

7. The computer-implemented method of claim 1, wherein the wall-loss condition comprises a partially corroded circumference of the metal wall, and
wherein the partially corroded circumference corresponds to at least one of: a corrosion from inside the metal wall, a corrosion from outside the metal wall, or a total loss of the metal wall.

8. A system comprising a smart PIG device and a computer system comprising one or more computer processors configured to perform the method of any one of claims 1 to 7.

9. A non-transitory computer-readable medium comprising software instructions, which, when executed by a computer, causes the system of claim 8 to perform the method of any one of claims 1 to 7.

## Patentansprüche

1. Computerimplementiertes Verfahren zum Instandhalten von vergrabenen Rohrleitungen, die einem Wanddickenverlust unterliegen, das Verfahren umfassend: Erzeugen einer ersten Datenstruktur, die eine Konfiguration einer vergrabenen Rohrleitung und eines Werkzeugs codiert, wobei die vergrabene Rohrleitung eine Metallwand umfasst, die einen Innenraum umschließt, wobei das Werkzeug Teil eines intelligenten Rohrleitungs-Inspektionsgeräts (Pipeline Intervention Gauge, PIG) (113) ist, das dazu ausgelegt ist, sich innerhalb des Innenraums durch die vergrabene Rohrleitung zu bewegen, wobei das Werkzeug einen Sender (112T, 114) und mehrere Empfänger (112R, 114, 116) umfasst, und wobei die mehreren Empfänger im Innenraum umlaufend angeordnet und von der Metallwand beabstandet sind;
wobei das Verfahren **dadurch gekennzeichnet ist, dass** eine zweite Datenstruktur erhalten wird, die einen Solver codiert, der dazu ausgelegt ist, dass er eine Antwort an einem der mehreren Empfänger von innerhalb der Metallwand der vergrabenen Rohrleitung simuliert;
Anwenden (502) des Solvers unter Verwendung der Konfiguration der vergrabenen Rohrleitung und des Werkzeugs, wenn der Sender eine bekannte elektromagnetische (EM) Wellenform in die Metallwand der vergrabenen Rohrleitung einspeist;
Erzeugen (503) simulierter Antworten an den mehreren Empfängern von innerhalb der Metallwand der vergrabenen Rohrleitung;
basierend zumindest teilweise auf den simulierten Antworten, Trainieren (504) eines Inferenzmodells, das dazu ausgelegt ist, den Wanddickenverlust einer bestimmten vergrabenen Rohrleitung vorherzusagen; und
Speichern (506) einer dritten Datenstruktur, die das Inferenzmodell codiert, auf dem intelligenten PIG-Gerät, sodass, wenn das intelligente PIG-Gerät die bestimmte vergrabene Rohrleitung durchfährt und Messdaten innerhalb der bestimmten vergrabenen Rohrleitung erhält, das Inferenzmodell den Wanddickenverlust der bestimmten vergrabenen Rohrleitung anhand der Messdaten vorhersagt.

2. Computerimplementiertes Verfahren nach Anspruch 1, wobei das Trainieren ferner umfasst:
Kalibrieren des Inferenzmodells durch Vergleichen der vorhergesagten Wanddickenverlustbedingung mit einer physisch beobachteten Wanddickenverlustbedingung der bestimmten vergrabenen Rohrleitung.

3. Computerimplementiertes Verfahren nach Anspruch 2, wobei das Trainieren ferner umfasst:
Anpassen des Inferenzmodells, um eine Differenz zwischen der vorhergesagten Wanddickenverlustbedingung und der physisch beobachteten Wanddickenverlustbedingung zu verringern.

4. Computerimplementiertes Verfahren nach Anspruch 1, wobei das Inferenzmodell mehrere Schichten eines künstlichen neuronalen Netzwerks (Artificial Neural Network, ANN) umfasst.

5. Computerimplementiertes Verfahren nach Anspruch 1, wobei der Solver einen physikbasierten Solver umfasst.

6. Computerimplementiertes Verfahren nach Anspruch 1, wobei die erste Datenstruktur eine Randbedingung der vergrabenen Rohrleitung vorgibt, damit der Solver Antworten an den Empfängern berechnet.

7. Computerimplementiertes Verfahren nach Anspruch 1, wobei die Wanddickenverlustbedingung einen teilweise korrodierten Umfang der Metallwand umfasst; und
wobei der teilweise korrodierte Umfang mindestens einem der folgenden entspricht: einer Korrosion von innen an der Metallwand, einer Korrosion von außen an der Metallwand oder einem vollständigen Verlust der Metallwand.

8. System, umfassend ein intelligentes PIG-Gerät und ein Computersystem mit einem oder mehreren Computerprozessoren, die dazu ausgelegt sind, das Verfahren nach einem der Ansprüche 1 bis 7 durchzuführen.

9. Nichtflüchtiges computerlesbares Medium, umfassend Softwareanweisungen, die bei Ausführung durch einen Computer das System von Anspruch 8 zum Durchführen des Verfahrens nach einem der Ansprüche 1 bis 7 veranlassen.

## Revendications

1. Procédé mis en œuvre par ordinateur pour maintenir des pipelines enterrés soumis à une condition de perte par les parois, le procédé comprenant :
la génération d'une première structure de données codant une configuration d'un pipeline enterré et d'un outil, le pipeline enterré comprenant une paroi métallique enfermant un espace intérieur, l'outil faisant partie d'un dispositif intelligent de jauge d'intervention de pipeline, PIG (113), configuré pour naviguer dans le pipeline enterré depuis l'intérieur de l'espace intérieur, l'outil comprenant un émetteur (112T, 114) et de multiples récepteurs (112R, 114, 116), et dans lequel les récepteurs multiples sont positionnés de façon circonférentielle dans l'espace intérieur et séparés de la paroi métallique ;
le procédé étant **caractérisé par** l'obtention d'une deuxième structure de données codant un solveur configuré pour simuler une réponse sur l'un des récepteurs multiples de l'intérieur de la paroi métallique du pipeline enterré ;
l'application (502) du solveur à l'aide de la configuration du pipeline enterré et de l'outil lorsque l'émetteur envoie une forme d'onde électromagnétique, EM, connue à l'intérieur de la paroi métallique du pipeline enterré ;
la génération (503) de réponses simulées sur les récepteurs multiples à partir de l'intérieur de la paroi métallique du pipeline enterré ;
sur la base, au moins en partie, des réponses simulées, l'entraînement (504) d'un modèle d'inférence configuré pour prédire l'état de perte par les parois d'un pipeline enterré particulier ; et
le stockage (506) d'une troisième structure de données codant le modèle d'inférence sur le dispositif PIG intelligent de sorte que lorsque le dispositif PIG intelligent navigue dans le pipeline enterré particulier et obtient des données de mesure à l'intérieur du pipeline enterré particulier, le modèle d'inférence prédit l'état de perte par les parois du pipeline enterré particulier à l'aide des données de mesure.

2. Procédé mis en œuvre par ordinateur selon la revendication 1, dans lequel l'entraînement comprend :
l'étalonnage du modèle d'inférence en comparant la condition de perte par les parois prédite avec une condition de perte par les parois physiquement observée du pipeline enterré particulier.

3. Procédé mis en œuvre par ordinateur selon la revendication 2, dans lequel l'entraînement comprend :
l'ajustement du modèle d'inférence pour réduire une différence entre la condition de perte par les parois prédite et la condition de perte par les parois physiquement observée.

4. Procédé mis en œuvre par ordinateur selon la revendication 1, dans lequel le modèle d'inférence comprend de multiples couches de réseau neuronal artificiel, ANN.

5. Procédé mis en œuvre par ordinateur selon la revendication 1, dans lequel le solveur comprend un solveur basé sur la physique.

6. Procédé mis en œuvre par ordinateur selon la revendication 1, dans lequel la première structure de données prescrit une condition de limite du pipeline enterré pour que le solveur calcule des réponses sur les récepteurs.

7. Procédé mis en œuvre par ordinateur selon la revendication 1, dans lequel la condition de perte par les parois comprend une circonférence partiellement corrodée de la paroi métallique, et
dans lequel la circonférence partiellement corrodée correspond à une corrosion provenant de l'intérieur de la paroi métallique et/ou une corrosion provenant de l'extérieur de la paroi métallique et/ou une perte totale de la paroi métallique.

8. Système comprenant un dispositif PIG intelligent et un système informatique comprenant un ou plusieurs processeurs informatiques configurés pour exécuter le procédé selon l'une quelconque des revendications 1 à 7.

9. Support non transitoire lisible par ordinateur comprenant des instructions logicielles qui, lorsqu'elles sont exécutées par un ordinateur, amènent le système selon la revendication 8 à exécuter le procédé selon l'une quelconque des revendications 1 à 7.
